# EUROPEAN PATENT APPLICATION

(11) **EP 0 638 734 A1**
(43) Date of publication of application: **15.02.1995**
(21) Application number: 94305770.3
(22) Date of filing: 03.08.1994
(51) Int. Cl.: F16C 3/02

(54) **A flexible drive shaft and method of production thereof**

(30) Priority: 13.08.1993 GB 9316862
(71) Applicant: MONO PUMPS LIMITED, Audenshaw, Manchester M34 5DQ (GB)
(72) Inventor: May, Geoffrey Harold, Rochdale, Lancashire OL11 4DN (GB)
(74) Representative: Allen, William Guy Fairfax

(57) **Abstract**

A flexible drive shaft for a progressive cavity pump or motor is formed from a shaft of steel which is hardened, tempered and then subsequently nitrided or nitro-carburized; examples are given: H13 Hot Work Tool Steel, D2 Cold Work Tool Steel and DIN 39 CrMoV 13 9 (1.8523).

## Description

This invention relates to drive shafts for use in progressive cavity pumps or motors. In these pumps or motors, a drive shaft is used between the drive and the rotor, since the rotor orbits about the centre line of the stator in the opposite sense to the rotation of the rotor. The drive shaft may take the form of either a rigid coupling rod with flexible joints at each end, or a flexible drive shaft. The flexible shaft has a number of advantages over the coupling rod, namely a smaller number of parts, no wearing or dynamic sealing parts, and consequent ease of assembly and maintenance.

The flexible drive shaft is subject to a combination of torsional stress, alternating bending stress (induced by the orbiting and rotating motion of the rotor) and tensile or compressive axial stress (from axial loads on the rotor).

Hence the design of a flexible drive shaft is considerably influenced by the yield and fatigue strength of the shaft material. Conventionally, stainless steels are used in the as machined condition without heat treatment. This leads to a long structure as compared to coupling rods.

According to the present invention, there is provided a method of producing a flexible drive shaft for a progressive cavity pump or motor, comprising the steps of:-
forming the shaft of a steel;
hardening and tempering the shaft; and,
nitriding or nitro-carburizing the shaft after hardening and tempering.

The shaft may, for example, be formed by forging and machining.

The steel may, for instance, be one of the Hot Work Tool Steels, Cold Work Tool Steels, or any other steel which allows the combination of hardening, tempering and subsequent nitriding or nitro-carburizing without loss of core strength.

Hot Work Tool Steels have hitherto been known for their hardness and high temper resistance, and have hence found application in for instance hot forging dies, where these properties are most important.

The applicants have found that these steels in the hardened and tempered condition combine a very high tensile strength with a very high fatigue endurance limit. Furthermore, the high temper resistance allows the fatigue endurance limit to be further enhanced by the subsequent nitriding or nitro-carburizing without loss of core tensile strength.

This allows flexible drive shafts made from these steels to be designed significantly shorter than shafts made from conventional steels.

The invention also provides a helical gear pump or motor comprising a flexible drive shaft formed according to the above method.

The preferred steel is grade H13 Hot Work Tool Steel, which allows the drive shaft to be shortened by approximately 30%. Grade H13 Tool Steel has the advantage that the steps of tempering and nitriding or nitro-carburizing, can actually increase the core strength of the shaft. Alternatively either grade D2 Cold Work Tool Steel, or DIN 39 CrMoV 13 9 (1.8523) may be used.

## Claims

1. A method of producing a flexible drive shaft for a progressive cavity pump or motor, comprising the steps of:-
forming the shaft of a steel;
hardening and tempering the shaft; and,
nitriding or nitro-carburizing the shaft after hardening and tempering.

2. A method according to claim 1, wherein the shaft is formed by forging and machining.

3. A method according to claim 1 or 2, wherein the steel is a Hot Work Tool Steel.

4. A method according to claim 1 or 2, wherein the steel is a Cold Work Tool Steel.

5. A method according to any preceding claim, wherein the steel allows a combination of hardening, tempering and subsequent nitriding or nitro-carburizing without loss of core strength.

6. A method according to claim 3, wherein the steel is grade H13 Hot Work Tool Steel.

7. A method according to claim 4, wherein the steel is grade D2 Cold Work Tool Steel.

8. A method according to claim 5, wherein the steel is DIN 39 CrMoV 13 9 (1.8523).

9. A flexible drive shaft, for a progressive cavity pump or motor, formed of a shaft of steel and subsequently hardened, tempered and then subsequently either nitrided or nitro-carburized.

10. A flexible drive shaft according to claim 9, which has been formed by forging and machining.

11. A flexible drive shaft according to claim 9 or 10, formed of a Hot Work Tool Steel.

12. A flexible drive shaft according to claim 9 or 10, formed of a Cold Work Tool Steel.

13. A flexible drive shaft according to claim 9, 10, 11 or 12, formed of a steel which allows the combination of hardening, tempering and subsequent nitriding or nitro-carburizing without loss of core strength.

14. A flexible drive shaft according to claim 11, wherein the steel is grade H13 Hot Work Tool Steel.

15. A flexible drive shaft according to claim 12, wherein the steel is grade D2 Cold Work Tool Steel.

16. A flexible drive shaft according to claim 13, wherein the steel is DIN 39 CrMoV 13 9 (1.8523).
